# DEMANDE DE BREVET EUROPEEN

(11) **EP 1 607 821 A1**
(43) Date de publication de la demande: **21.12.2005**
(21) Numéro de dépôt: 04102768.1
(22) Date de dépôt: 17.06.2004
(51) Int. Cl.: G06F 1/00, G06F 9/445, H04N 7/24

(54) **Méthode de mise à jour sécurisée de logiciel dans un mobile de sécurité**

(71) Demandeur: Nagracard S.A., 1033 Cheseaux-sur-Lausanne (CH)
(72) Inventeur: OSEN, Karl, 1282, Dardagny (CH)
(74) Mandataire: Wenger, Joel-Théophile

(57) **Abrégé**

Le but de la présente invention est de proposer une méthode de transmission d'un message contenant un bloc de programme permettant d'éviter les conséquences d'une éventuelle décryption malveillante de ce message.

Ce but est atteint par une méthode de mise à jour de logiciel embarqué dans un module de sécurité, cette méthode comprenant des étapes suivantes:
- formation d'un premier bloc de programme (PBI) de mise à jour,
- détermination d'une zone de mémoire cible dudit module de sécurité,
- détermination pour ledit module de sécurité, du contenu préenregistré (MM_Ref) dans ladite zone de mémoire,
- formation d'un second bloc de programme (SBI) obtenu par le mélange de tout ou partie du contenu préenregistré et du premier bloc de programme (PBI),
- transmission du second bloc de programme (SBI) au module de sécurité,
- réception du second bloc par le module de sécurité,
- lecture de la zone de mémoire cible (MEM),
- obtention et écriture dans la mémoire cible du premier bloc par le mélange inverse de tout ou partie du second bloc et du contenu de la zone cible.

## Description

La présente demande concerne le domaine des modules de sécurité, en particulier les modules de sécurité disposant de logiciels pouvant être mis à jour.

Ces modules de sécurité sont en charge de nombreuses fonctions telles que l'authentification, la vérification des droits ou la gestion d'un crédit. Ces fonctions nécessitent des capacités de traitement importantes et disposent de microprocesseurs rapides dont une grande partie du logiciel est mémorisé dans une mémoire réinscriptible.

C'est ainsi qu'une fois qu'une erreur de programmation ou une faille dans la sécurité est détectée, un bloc de correction est préparé et stocké dans une région libre de la mémoire. Une modification est également effectuée dans la partie programme pour bénéficier des fonctionnalités de ce nouveau bloc de programme.

Lorsqu'un tel module est utilisé dans un système décentralisé, la mise à jour des modules de sécurité se fait par les moyens de télécommunication disponibles tels que la diffusion (un grand nombre de modules reçoivent le même message) ou une liaison point-par-point.

Dans les deux cas, mais particulièrement dans le premier cas, le message de mise à jour est vulnérable aux attaques des personnes malveillantes. L'analyse du message reçu par un module pourrait donner des indices révélateurs sur le fonctionnement dudit module et révéler des secrets liés à la sécurité.

Il est certain que ces messages sont encryptés, mais des moyens importants sont mis en oeuvre par ces personnes malveillantes pour décrypter ces messages et en extraire le contenu.

Les modules considérés par la présente invention sont utilisés dans la télévision à péage, dans les téléphones portables, voire dans les applications bancaires.

Pour la suite de l'exposé, nous prendrons le domaine de la télévision à péage comme exemple.

Selon un procédé connu, le centre de surveillance est informé d'une faille de la sécurité et va préparer un bloc de programme, appelé "patch" qui est destiné à mettre à jour le logiciel du module de sécurité.

Le bloc ainsi préparé, il est encrypté par une ou plusieurs clés propres aux modules de sécurité. Il est possible d'encrypter ce bloc soit par une clé globale, commune à tous les modules de sécurité, soit par une clé personnelle, propre à chaque module. Dans ce dernier cas, il faudra préparer autant de messages qu'il y aura de modules de sécurité différents.

Le message est ensuite envoyé au centre de gestion qui dispose des moyens de transmission vers les modules. Dans un système unidirectionnel, le message est répété durant une période donnée afin de s'assurer que chaque module l'a reçu.

L'homme du métier est placé dans une position difficile lorsqu'une faille de sécurité est détectée car il doit peser les risques qu'un tel message soit analysé par un tiers et les risques de laisser cette faille ouverte. Ce dilemme a conduit parfois à s'interdire de corriger un défaut du programme car le risque de compréhension du programme de remplacement était trop important.

Le but de la présente invention est de permettre à l'homme du métier de transmettre un message contenant un bloc de programme dans un message sans avoir à s'inquiéter du résultat d'une décryption malveillante de ce message.

Ce but est atteint par une méthode de mise à jour de logiciel embarqué dans un module de sécurité, cette méthode comprenant des étapes suivantes:
- formation d'un premier bloc de programme de mise à jour,
- détermination d'une zone de mémoire cible dudit module de sécurité,
- détermination pour ledit module de sécurité, du contenu préenregistré dans ladite zone de mémoire,
- formation d'un second bloc de programme obtenu par le mélange du contenu préenregistré et du premier bloc de programme,
- transmission du second bloc de programme au module de sécurité,
- réception du second bloc par le module de sécurité,
- lecture de la zone de mémoire cible,
- obtention et écriture dans la mémoire cible du premier bloc par le mélange inverse du second bloc et du contenu de la zone cible.

Ainsi, grâce à l'invention, le code transmis (second bloc) n'a aucun rapport avec le premier bloc pour qui ne connaît pas le contenu de la mémoire cible.

Un tiers arrivant à décrypter le message n'apprendra rien de plus sur le fonctionnement du module de sécurité.

Cette méthode peut s'appliquer à un envoi du même message à tous les modules de sécurité et dans ce cas, on considère que le contenu de la zone de mémoire cible est le même pour tous les modules. Si un adressage individuel est réalisé, il est possible que le contenu de chaque mémoire soit différent. Une fois le premier bloc de programme généré, il est mélangé avec les données de chaque module de sécurité pour créer autant de seconds bloc de programme.

L'invention sera mieux comprise grâce à la description détaillée qui va suivre et qui se réfère aux dessins annexés qui sont donnés à titre d'exemple nullement limitatif, à savoir:
- la figure 1 illustre le procédé de génération du second bloc,
- la figure 2 illustre le procédé d'écriture dans la mémoire du module de sécurité.

Selon une première variante de réalisation, le contenu de la mémoire cible est préenregistré avec des valeurs pseudo-aléatoires. Lors de la personnalisation d'un tel module, on mémorise des données générées aléatoirement MM_Ref d'une part dans le module de sécurité MEM et d'autre part au centre de gestion.

Selon une seconde variante de réalisation les données pré-enregistrées sont constituées de code programme qui pourrait être exécuté par le processeur du module de sécurité. En fait, ce code n'est jamais exécuté et sert de valeur d'initialisation de la région de mise à jour. Comme dans l'exemple précédant, tous les modules peuvent avoir le même programme factice ou chaque module reçoit un programme différent.

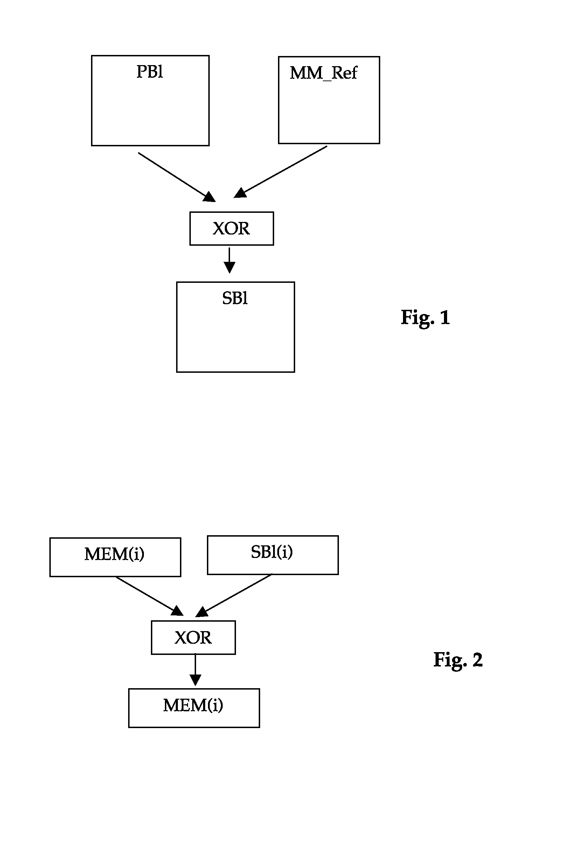

La figure 1 illustre le procédé de formation d'un second bloc de programme destiné à la diffusion.

Lorsqu'un bloc de programme PBI est prêt à être diffusé, la méthode de l'invention consiste à déterminer la localisation future de ce bloc dans le module de sécurité. Une fois cette localisation connue, on peut retrouver le contenu qui avait été programmé lors de la personnalisation grâce aux données mémorisées dans le centre de gestion. Une fois ces données connues, l'opération consiste à mélanger ces données avec le bloc de programme PBI afin d'obtenir un nouveau bloc de données SB.

Cette opération de mélange peut être de différente nature. Le plus simple est d'utiliser une fonction XOR entre le bloc de programme PBI et les données pré-enregistrées MM_Ref.

Un deuxième exemple de mélange consiste à chiffrer chaque location mémoire du bloc de programme PBI avec le contenu des données pré-enregistrées MM_Ref.

Le résultat de ce mélange forme le second bloc de programme SBI. Ce bloc ainsi composé peut être transmis au module de sécurité concerné, selon le mode de communication disponible entre le centre de gestion et le module de sécurité. Il est chiffré par des clés de chiffrement du système selon des méthodes connues.

La figure 2 montre le processus d'écriture dans la mémoire du module de sécurité.

L'opération d'écriture du nouveau bloc de programme dans la mémoire du module de sécurité, une fois le second bloc reçu, passe par une opération de lecture du contenu de la location mémoire visée. Selon notre exemple, chaque location mémoire i de la zone cible MEM est lue et traitée (ou mélangée) selon l'algorithme choisi. Dans cet exemple, chaque location mémoire est mélangée avec la location correspondante i du second bloc SBI de programme. Le résultat est inscrit dans la mémoire du module de sécurité.

II est à noter que le bloc de programme à mettre à jour est accompagné de données de vérification selon des modes connus (hash, CRC etc). Une fois le programme stocké dans la mémoire du module, et dûment vérifié, il peut être activé généralement par la modification d'une partie du programme dans la zone principale.

Ce processus peut être récurrent c'est-à-dire que si l'on souhaite modifier une partie dans la zone de programme qui a déjà accueilli un programme, l'ancien programme fait office de valeur pré-enregistrée. Selon un exemple où le nouveau programme occuperait plus de place, le centre de gestion prendrait comme valeurs pré-enregistrées, le contenu du programme précédent et pour la place mémoire non encore utilisée, utiliserait les valeurs pré-enregistrées générées lors de la personnalisation.

Dans la pratique, le centre de gestion va conserver un module de sécurité virtuel dont le contenu représente le contenu du module de sécurité dans le terrain. Tous les programmes destinés aux modules de sécurité sont également introduits dans le module virtuel.

Selon une variante de réalisation, une partie seulement de la zone cible est pré-enregistrée par des valeurs spécifiques, par exemple une location sur trois. Le reste est laissé vierge. Ainsi le mélange serra effectué seulement sur une location sur trois, les autres locations étant laissées sans modification.

## Revendications

1. Méthode de mise à jour de logiciel embarqué dans un module de sécurité, cette méthode comprenant des étapes suivantes:
- formation d'un premier bloc de programme (PBI) de mise à jour,
- détermination d'une zone de mémoire cible dudit module de sécurité,
- détermination pour ledit module de sécurité, du contenu préenregistré (MM_Ref) dans ladite zone de mémoire,
- formation d'un second bloc de programme (SBI) obtenu par le mélange de tout ou partie du contenu préenregistré et du premier bloc de programme (PBI),
- transmission du second bloc de programme (SBI) au module de sécurité,
- réception du second bloc par le module de sécurité,
- lecture de la zone de mémoire cible (MEM),
- obtention et écriture dans la mémoire cible du premier bloc par le mélange inverse de tout ou partie du second bloc et du contenu de la zone cible.

2. Méthode selon la revendication 1, **caractérisée en ce que** la zone de mémoire cible est pré-enregistrées par des valeurs générées aléatoirement.

3. Méthode selon la revendication 1 mettant en oeuvre un module qui comprend un microprocesseur, **caractérisée en ce que** la zone de mémoire cible est pré-enregistrées par un programme factice non exécuté par le microprocesseur du module de sécurité.

4. Méthode selon les revendications 1 à 3, **caractérisée en ce que** l'opération de mélange est une fonction OU exclusive.

5. Méthode selon les revendications 1 à 3, **caractérisée en ce que** l'opération de mélange est une fonction d'encryption avec le contenu de la mémoire pré-enregistrée comme clé d'encryption.
